**Europäisches Patentamt**

**European Patent Office**

**Office européen des brevets**

(11) Veröffentlichungsnummer: **0 069 045**
**B1**

(12) # EUROPÄISCHE PATENTSCHRIFT

(45) Veröffentlichungstag der Patentschrift:
**19.11.87**

(51) Int. Cl.⁴: **H 02 B 1/04**

(21) Anmeldenummer: **82730071.6**

(22) Anmeldetag: **02.06.82**

(54) Stecksockel für mehrpolige Niederspannungs-Schutzschalter.

(30) Priorität: **30.06.81 DE 3126306**

(43) Veröffentlichungstag der Anmeldung:
**05.01.83 Patentblatt 83/1**

(45) Bekanntmachung des Hinweises auf die Patenterteilung:
**19.11.87 Patentblatt 87/47**

(84) Benannte Vertragsstaaten:
**FR GB IT**

(56) Entgegenhaltungen:
**US - A - 2 805 294**

(73) Patentinhaber: **Siemens Aktiengesellschaft Berlin und München, Wittelsbacherplatz 2, D-8000 München 2 (DE)**

(72) Erfinder: **Preuss, Bernhard, Ing. grad., Finckensteinallee 152c, D-1000 Berlin 45 (DE)**
Erfinder: **Krüger, Manfred, Wiesenstrasse 8b, D-1000 Berlin 65 (DE)**

ACTORUM AG

**Beschreibung**

Die Erfindung befasst sich mit einem Stecksockel für mehrpolige Niederspannungs-Schutzschalter mit Isolierstoffgehäuse und an gegenüberliegenden Enden des Isolierstoffgehäuses befindlichen Anschlussvorrichtungen, wobei der Stecksockel eine Auflagefläche für den Schutzschalter und den Anschlussvorrichtungen des Schutzschalters zugeordnete Kontakteinheiten für schalterseitige Kontaktstücke sowie Anschlussglieder besitzt.

Ein Stecksockel dieser Art ist z.B. durch die US-A-2 707 761 und die US-A-2 805 294 bekannt geworden. Der Schutzschalter ist dabei eine Sonderausführung mit rückseitig angeordneten Anschlussvorrichtungen. Mit diesen wirken an dem Stecksockel angebrachte Messerkontaktstücke zusammen.

Der Erfindung liegt die Aufgabe zugrunde, den Stecksockel so auszubilden, dass er auch bei einer relativ grossen Baugrösse bei möglichst vielseitiger Verwendbarkeit leicht herstellbar ist. Damit soll erreicht werden, dass die Technik der steckbaren Schutzschalter auch für die höheren Nennströme, z.B. 630 oder 800 A, wirtschaftlich anwendbar ist. Hierfür ist es wesentlich, Schutzschalter in der üblichen Ausführung verwenden zu können, d.h. solche mit der üblichen Ausführung der Anschlussvorrichtungen für stirnseitigen Schienen- oder Kabelanschluss.

Die genannte Aufgabe wird bei einem Stecksockel der eingangs genannten Art dadurch gelöst, dass der Stecksockel aus zwei formschlüssig zusammenfügbar ausgebildeten Teilstücken zusammensetzbar ist, von denen jedes einen Teil der Auflagefläche und Kontakteinheiten umfasst. Bei symmetrischer Ausführung der Teilstücke verringert sich die Grösse der zur Herstellung benötigten Werkzeuge bzw. Formen um die Hälfte. Der vollständige Stecksockel entsteht dann durch Zusammenfügung zweier gleicher Teilstücke. Sieht man andererseits eine unsymmetrische Teilung vor, so lassen sich mit zwei Grundformen Stecksockel in drei verschiedenen Längen zusammensetzen, wodurch ein Stecksockelsystem für Schutzschalter geschaffen wird, die bei gleicher Breite verschieden lang sind.

Der Formschluss zwischen den Teilstücken des Stecksockels kann in vorteilhafter Weise durch jeweils einen Vorsprung mit einem zahnförmig überstehenden Bereich und eine daneben angeordnete Ausnehmung mit einer entsprechenden Kontur gebildet sein. Der Vorteil der zahnförmigen Kontur besteht darin, dass beim Zusammenfügen eine gegenseitige Verspannung der Teilstücke auftritt, die bei geeigneter Anordnung von Passflächen ohne weiteres die Einhaltung einer gewünschten Gesamtlänge des Stecksockels gewährleistet.

Wie bereits erwähnt, ist es für eine wirtschaftliche Anwendung des Stecksockelsystems wesentlich, Schutzschalter mit üblicher Ausführung der Anschlussvorrichtungen verwenden zu können. Hierzu kann durch eine Ausbildung des Stecksokkels beigetragen werden, bei der die Kontakteinheiten jedes Teilstückes des Stecksockels brückenartige, in einem Käfig gehaltene Kontaktlamellen aufweisen und wobei die in Ausnehmungen der Teilstücke aufgenommenen Käfige Öffnungen zum Eingreifen schalterseitiger Messerkontaktstücke und der äusseren Anschlussglieder besitzen. Somit ist es nun erforderlich, die Anschlussvorrichtungen des Schutzschalters mit den Messerkontaktstücken zu versehen, um ihn zusammen mit dem Stecksockel benutzen zu können. Besonders geeignet im vorliegenden Zusammenhang sind die brückenartigen Kontaktlamellen gemäss DE-A-1 665 986. Die dort angegebene Anordnung und Ausbildung der Kontaktlamellen führt zu einer verhältnismässig geringen Kraft beim Aufsetzen des Schutzschalters auf den Stecksockel und zu einer sicheren Kontaktgabe sowohl schalterseitig als auch an den äusseren Anschlussgliedern.

Durch die Ausbildung des Stecksockels und der Anschlussglieder lässt sich noch eine grössere Vielseitigkeit bei der Anwendung des Stecksockels erreichen, ohne dass Sonderausführungen erforderlich sind. Dies kann dadurch geschehen, dass jedes Teilstück des Stecksockels für jede Strombahn eine in der Längsrichtung des Stecksockels und eine weitere, an der Rückseite des Stecksockels mündende Öffnung für den Durchtritt eines Anschlussgliedes besitzt. Durch Einsetzen entsprechend geformter Anschlussglieder ist daher der Stecksockel wahlweise mit stirnseitigen oder rückwärtigen Anschlüssen zu versehen.

Ferner kann jedes Anschlussglied zwei im rechten Winkel zueinander stehende, zum Eingreifen zwischen die Kontaktlamellen bestimmte Kontaktflächen aufweisen, und der eine Schenkel des Anschlussgliedes kann wahlweise in die eine oder die andere Öffnung einsteckbar sein. Für beide erwähnte Anschlussarten genügt somit eine einzige Ausführung der Anschlussglieder.

Die elektrische Sicherheit des Stecksockels gemäss der Erfindung kann noch dadurch verbessert werden, dass jedes Teilstück eine schwenkbar gelagerte Isolierplatte als Abdeckung der zum Eingreifen der Steckkontaktstücke des Schutzschalters in die Kontakteinheiten dienenden Öffnungen besitzt und dass die Isolierplatte und der zugeordnete Endbereich eine Öffnung zum Hindurchziehen eines Sicherungsorgans in der hochgeklappten Stellung aufweist. Die Isolierplatte liegt bei normaler Benutzung des Stecksockels parallel zu der Auflagefläche und bildet somit selbst einen Teil der Auflagefläche. Wird der Schutzschalter abgenommen und soll der Stecksockel gegen das erneute Einsetzen des Schutzschalters gesichert werden, so wird die Isolierplatte hochgeklappt und durch Hindurchziehen eines Sicherungsorgans, z.B. des Schlossbügels eines Vorhängeschlosses, durch eine der Öffnungen der Isolierplatte und eine damit korrespondierende Öffnung in dem zugehörigen Endbereich des Stecksockels festgehalten. Der Schlossbügel verhindert das Einsetzen des Schutzschalters. Zugleich sind die Kontakteinheiten gegen zufällige Berührung mit leitenden Gegenständen geschützt.

Die Erfindung wird im folgenden anhand des in den Figuren dargestellten Ausführungsbeispieles näher erläutert.

Die Fig. 1 zeigt eine perspektivische Ansicht eines Stecksockels gemäss der Erfindung mit einem aufzusetzenden Niederspannungs-Schutzschalter.

Die Fig. 2 und 3 zeigen ein Steckkontaktstück in zwei gegeneinander um 90° gedrehten Ansichten.

Die Fig. 4 ist ein Schnitt durch eine der in dem Stecksockel enthaltenen Kontakteinheiten.

In den Fig. 5 und 6 sind Schnitte durch den Endteil eines Teilstückes des Stecksockels entlang zweier verschiedener Schnittlinien dargestellt; in der Fig. 5 ist ein Anschlussglied für stirnseitigen Anschluss und in der Fig. 6 für rückseitigen Anschluss montiert.

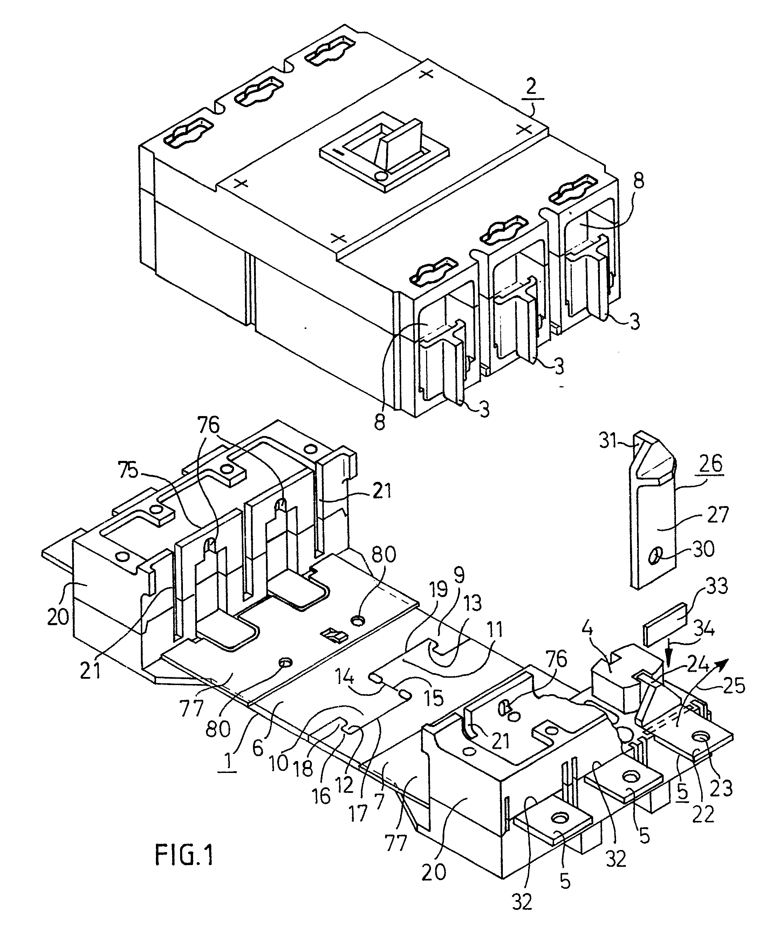

Der in der Fig. 1 gezeigte Stecksockel 1 dient zur Aufnahme eines Niederspannungs-Schutzschalters 2, der in abgehobener Stellung eingezeichnet ist. Es kann sich dabei um einen Schalter handeln, wie er beispielsweise in der DE-A-2 817 667 beschrieben ist. Stirnseitig sind Anschlussvorrichtungen 8 vorhanden, mit denen noch zu erläuternde Steckkontaktstücke 3 verbunden sind. Diese greifen in gleichfalls noch zu beschreibende Kontakteinheiten 4 ein, von denen eine in der Fig. 1 in dem teilweise aufgebrochen dargestellten vorderen Endbereich gezeigt ist. In der Längsrichtung des Stecksockels 1 erstrecken sich schienenförmig Anschlussglieder 5, an die Stromschienen oder Kabel anschliessbar sind.

Der Stecksockel 1 besteht aus zwei gleichen Teilstücken 6 und 7, die formschlüssig zusammengefügt sind und die gemeinsam eine Auflagefläche 9 für den Schutzschalter 2 bilden. Hierzu besitzt jedes Teilstück an dem Ende seines ebenen, die Auflagefläche bildenden Bereiches einen Vorsprung 10 bzw. 11, dessen näher zum Rand gelegener Bereich 12 bzw. 13 zahnförmig überstehend geformt ist. Die inneren Flanken 14 bzw. 15 der Vorsprünge 10 und 11 sind geradlinig in der Längsrichtung des Stecksockels 1 ausgebildet und enden in Erweiterungen, die vorgesehen sind, um das Zusammenfügen der Teilstücke zu erleichtern.

Wie man erkennt, greifen beide Teilstücke 6 und 7 entlang einer mehrfach abgewinkelten Linie ineinander, wobei der überstehende Bereich 12 des Vorsprunges 10 in eine entsprechende Hinterschneidung 16 der Ausnehmung 17 eingreift, die einen vorspringenden Bereich 18 besitzt. Eine Verzahnung dieser Art ist in symmetrischer Anordnung auch an dem Vorsprung 11 des Teilstückes 7 und der Ausnehmung 19 des Teilstückes 6 vorhanden. Durch dieses verzahnte Ineinandergreifen der Teilstücke wird eine feste gegenseitige Verzahnung erreicht, die allen Ansprüchen an einen Stecksockel für Schutzschalter genügt.

An seinen Endbereichen weist der Stecksockel 1 für jede der drei benachbarten Strombahnen Ausnehmungen von Kontakteinheiten 4 auf. Die Ausnehmungen sind durch einen teilweise aufgebrochen dargestellten Deckel 20 verschlossen. Der Deckel lässt in der Längsrichtung des Stecksockels Öffnungen 21 frei, die zum Einführen der Steckkontaktstücke 3 dienen. Auf der gegenüberliegenden Seite werden gleichfalls Öffnungen zum Durchtritt der Anschlussglieder 5 freigelassen. Diese besitzen einen Schenkel 22, der in dem gezeigten Beispiel eine Bohrung 23 für eine Klemmschraube besitzt. Quer zu dem Schenkel 22 erstreckt sich ein Messerkontaktstück 24, das in die Kontakteinheit 4 eingreift.

Anstelle des Anschlussgliedes 5, das bei abgenommenem Deckel 20 in Richtung des gebogenen Pfeiles 25 in Fig. 1 abnehmbar ist, lässt sich ein anderes Anschlussstück 26 einsetzen, das gleichfalls einen Schenkel 27 als äusseres Anschlussteil mit einer Bohrung 30 aufweist. Im Unterschied zu dem Anschlussglied 5 erstreckt sich das Anschlussglied 26 mit seinem Schenkel 27 durch eine in der Fig. 1 nicht sichtbare Öffnung, die an der Unter- bzw. Rückseite des Stecksockels 1 mündet. Das Anschlussglied 26 ermöglicht daher die Verwendung des Stecksockels für den rückwärtigen Anschluss von Stromschienen oder Kabeln, falls dies erwünscht ist. Das Zusammenwirken des Anschlussgliedes 26 mit der Kontakteinheit 4 geschieht in sinngemäss der gleichen Weise wie bei der Verwendung des Anschlussgliedes 5 durch ein an den Schenkel 27 oben angeformtes Messerkontaktstück 31.

Um eine zufällige Gefährdung durch das Eindringen eines leitenden Gegenstandes durch eine der Öffnungen 32 zu verhindern, durch die sich bei der Verwendung der Anschlussglieder 5 deren Schenkel 22 erstreckt, lässt sich eine Isolierplatte 33 in Richtung des Pfeiles 34 in eine passende Ausnehmung einlegen, die durch das Aufsetzen des Deckels 20 festgehalten wird.

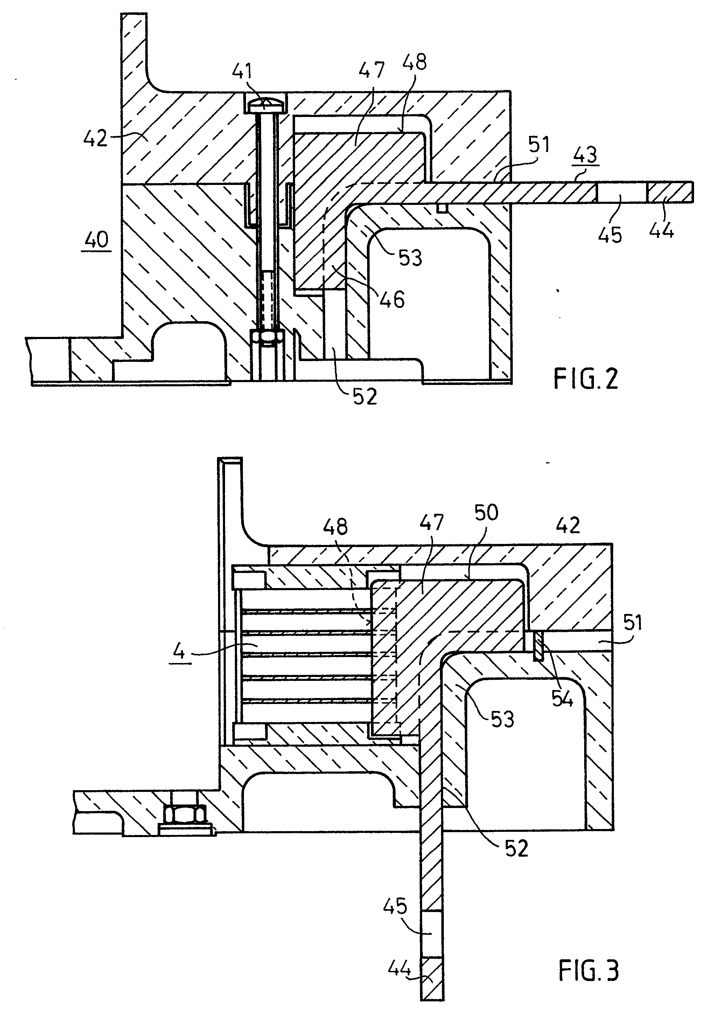

Ein anderes Anschlussglied, das bei unveränderter Ausführung sowohl einen stirnseitigen als auch einen rückseitigen Anschluss ermöglicht, zeigen die Fig. 2 und 3. Dabei zeigt die Fig. 2 einen Schnitt durch einen abweichend geformten Endbereich 40 eines Stecksockels entlang einer abgewinkelten Schnittlinie, durch die eine Verbindungsschraube 41 für einen Deckel 42 sichtbar gemacht ist. Ein Anschlussglied 43 ist rechtwinklig abgewinkelt ausgebildet und besitzt einen längeren Schenkel 44 mit einer Bohrung 45 und einen kürzeren Schenkel 46. Über den Winkelbereich erstreckt sich ein mit den Schenkeln fest verbundenes oder einstückig mit diesen ausgebildetes Messerkontaktstück 47, das dementsprechend zwei unter einem rechten Winkel zueinander stehende Kontaktbereiche 48 und 50 aufweist.

Zur Benutzung der einen oder der anderen Stellung ist der Endbereich 40 des Stecksockels mit je einer Öffnung 51 an der Stirnseite und einer Öffnung 52 an der Rückseite versehen. Wie man erkennt, erstreckt sich der Schenkel 44 wahlweise durch die Öffnung 51 (Fig. 2) oder durch die Öffnung 52 (Fig. 3) und ist in diesen Stellungen für den Anschluss von Stromschienen oder Kabeln zugänglich. In beiden Fällen dient eine Auflageschulter 53 des Endbereiches 40 als Widerlager gegen ein Herausziehen des Anschlussgliedes 43 und zur Ausrichtung des Messerkontaktstückes 47 auf eine zugeordnete Kontakteinheit 4, deren Lamellen in der Fig. 3 erkennbar sind. Ein Isolierstück 54 verschliesst die Öffnung 51, wenn das Anschlussglied 43 für den rückwärtigen Anschluss montiert ist.

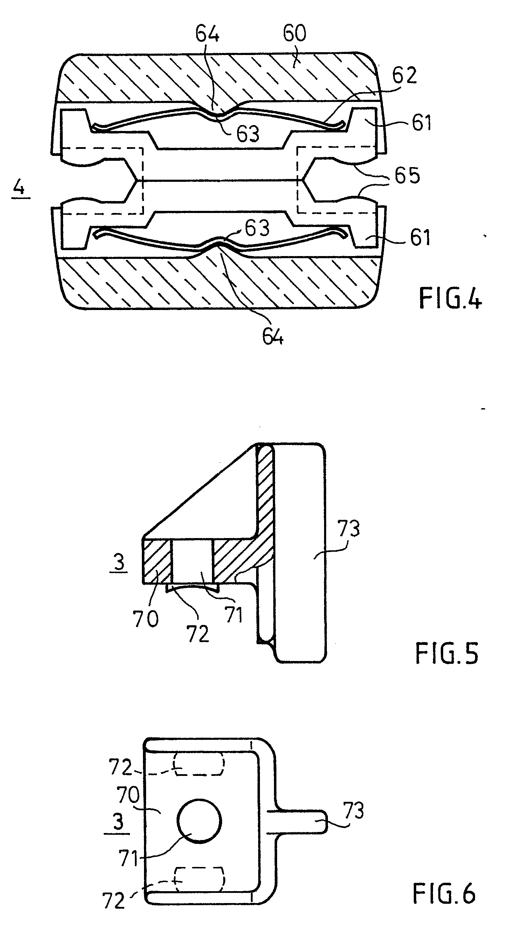

Die Kontakteinheiten 4 sind in gleicher Weise für die Anschlussglieder 5, 26 und 43 verwendbar. Wie die Fig. 4 zeigt, weist die Kontakteinheit 4 ein käfigartiges Gehäuse 60 auf, das mehrere Paare von Kontaktlamellen 61 enthält. Jede Lamelle 61 stützt sich über eine Blattfeder 62 gegen die innere Wandung des Gehäuses 60 ab. Durch eine Eindellung 63 jeder Blattfeder 62 und einen entsprechend geformten Vorsprung 64 des Gehäuses 60 wird eine Sicherung gegen axiale Verschiebung der Kontaktlamellen erreicht. An ihren gegenüberliegenden Enden besitzen die Kontaktlamellen 61 ballige Kontaktflächen 65, die mit den Messerkontaktstücken der Anschlussglieder 5, 26 oder 43 bzw. den Steckkontaktstücken 3 zusammenwirken. Näheres über die Wirkungsweise der Kontakteinheiten 4 ist der DE-A-1 665 986 zu entnehmen, so dass an dieser Stelle von einer weiteren Erläuterung abgesehen werden kann.

Ein Beispiel für geeignete Steckkontaktstücke 3 ist in den Fig. 5 und 6 gezeigt. Die Steckkontaktstücke 3 weisen ein zur Auflage auf einer zu jeder Anschlussvorrichtung 8 des Schutzschalters 2 gehörenden Klemmplatte vorgesehenes Klemmstück 70 mit einer Bohrung 71 für die Befestigungsschraube auf. Zu beiden Seiten der Bohrung 71 befinden sich konkav ausgearbeitete Vorsprünge 72, die zum Eingreifen in Schraubenlöcher der schalterseitigen Klemmplatte dienen. Hierdurch wird ein Verdrehschutz gebildet. Ein Messerkontaktstück 73 ist einstückig mit dem Klemmstück 70 ausgebildet. Dieses dient in der bereits erwähnten Weise zum Eingreifen zwischen die Kontaktlamellen der Kontakteinheiten 4.

Wie besonders die Fig. 1 zeigt, besitzt jeder der Endbereiche des Stecksockels 1 einen an die Deckel 20 angeformten querliegenden Steg 75, von denen jeder zwei Durchgangslöcher 76 zum Hindurchziehen des Schlossbügels eines Vorhängeschlosses besitzt. Ist ein Vorhängeschloss eingehängt, so kann der Schutzschalter 2 nicht auf den Stecksockel 1 aufgesetzt werden. Darüber hinaus ist jedem der Endbereiche eine in Gelenken schwenkbar gehalten Isolierplatte 77 zugeordnet, die gleichfalls je zwei Durchgangsöffnungen 80 besitzen. Im hochgeklappten Zustand korrespondieren die Öffnungen 80 mit den Öffnungen 76 der Stege 75, so dass die Isolierplatte durch ein Vorhängeschloss in der hochgeklappten Stellung festgehalten werden kann. Die Schlitze 21, die für das Eingreifen der Steckkontaktstücke 3 vorgesehen sind, werden dann verdeckt, so dass eine Berührungsgefahr mit spannungsführenden Teilen des Stecksockels vermieden wird.

Wie der vorstehenden Beschreibung zu entnehmen ist, lässt sich der Stecksockel durch einfaches formschlüssiges Zusammenfügen gleicher Teile zusammensetzen. Zu seiner Herstellung, z.B. aus einem Formpressstoff, benötigt man daher nur relativ kleine Werkzeuge. Andererseits lassen sich mit einer gegebenen Werkzeuggrösse Stecksockel für grössere Schutzschalter herstellen. Wählt man entgegen dem beschriebenen Beispiel eine unsymmetrische Teilung bei ansonsten gleicher Ausführung der formschlüssig ineinandergreifenden Elemente, wie dies in der Fig. 1 gestrichelt bei 45 angedeutet ist, so benötigt man zwar zwei verschiedene Formen bzw. Werkzeuge, gewinnt dadurch aber die Möglichkeit, drei verschiedene Stecksockel herstellen zu können, die sich bei gleicher Breite durch ihre Länge unterscheiden. Auf diese Weise kann ein Stecksockelsystem für Schutzschalter verschiedener Länge geschaffen werden.

Wie man erkennt, lässt sich ein formschlüssiges Ineinandergreifen der Teilstücke des Stecksockels auch durch andere Formen der ineinandergreifenden Teile erzielen, wofür es in der Technik viele Beispiele gibt. Die vorstehend beschriebene Gestaltung hat sich jedoch bei Versuchen sowohl hinsichtlich der mechanischen Eigenschaften als auch hinsichtlich ihrer Verstellbarkeit bewährt und wird daher bevorzugt.

Durch das wahlweise Einlegen der Anschlussglieder in der einen oder anderen Stellung entsprechend den Fig. 2 und 3 lässt sich der Stecksockel ohne Verwendung spezieller Teile an die Leitungsführung in den elektrischen Anlagen anpassen.

**Patentansprüche**

1. Stecksockel (1) für mehrpolige Niederspannungs-Schutzschalter (2) mit Isolierstoffgehäuse und an gegenüberliegenden Enden des Isolierstoffgehäuses befindlichen Anschlussvorrichtungen (8), wobei der Stecksockel (1) eine Auflagefläche (9) für den Schutzschalter (2) und den Anschlussvorrichtungen (8) des Schutzschalters (2) zugeordnete Kontakteinheiten (4) für schalterseitige Kontaktstücke (3) sowie Anschlussglieder (5) besitzt, dadurch gekennzeichnet, dass der Stecksockel (1) aus zwei formschlüssig zusammenfügbar ausgebildeten Teilstücken (6, 7) zusammensetzbar ist, von denen jedes einen Teil der Auflagefläche (9) und Kontakteinheiten (4) umfasst.

2. Stecksockel nach Anspruch 2, dadurch gekennzeichnet, dass jedes Teilstück (6, 7) des Stecksockels (1) einen Vorsprung (10, 11) mit einem zahnförmig überstehenden Bereich (12, 13) und eine daneben angeordnete Ausnehmung (17, 19) mit einer entsprechenden Kontur besitzt.

3. Stecksockel nach Anspruch 1, dadurch gekennzeichnet, dass die Kontakteinheiten (4) jedes Teilstückes (6, 7) des Stecksockels (1) brückenartige, in einem Käfig (41) gehaltene Kontaktlamellen (61) aufweisen und dass die in Ausnehmungen der Teilstücke (6, 7) aufgenommenen Käfige (41) Öffnungen zum Eingreifen schalterseitiger Steckkontaktstücke (3) und der äusseren Anschlussglieder (5) besitzen.

4. Stecksockel nach Anspruch 1, dadurch gekennzeichnet, dass jedes Teilstück (6, 7) des Stecksockels (1) für jede Strombahn eine in der Längsrichtung des Stecksockels und eine weitere, an der Rückseite des Stecksockels mündende Öffnung (51, 52) für den Durchtritt eines Anschlussgliedes (5; 43) besitzt.

5. Stecksockel nach Anspruch 3, dadurch gekennzeichnet, dass jedes Anschlussglied (5) zwei im rechten Winkel zueinander stehende, zum Eingreifen zwischen die Kontaktlamellen (61) bestimmte Kontaktflächen (48, 50) aufweist und der eine Schenkel (44) des Anschlussgliedes wahlweise durch die eine (51) oder die andere Öffnung (52) einsteckbar ist.

6. Stecksockel nach Anspruch 1, dadurch gekennzeichnet, dass jedes Teilstück (6, 7) eine schwenkbar gelagerte Isolierplatte (77) als Abdeckung der zum Eingreifen der Steckkontaktstücke (3) des Schutzschalters (2) in die Kontakteinheiten (4) dienenden Öffnungen (21) besitzt und dass die Isolierplatte und der zugeordnete Endbereich (Deckel 20) wenigstens eine Öffnung (76, 80) zum Hindurchziehen eines Sicherungsorgans in der hochgeklappten Stellung aufweist.

**Claims**

1. A plug-in socket (1) for multi-pole low-voltage protective switches (2) comprising an insulating housing and connecting devices (8) which are arranged at opposite ends of the insulating housing, wherein the plug-in socket (1) is provided with a bearing surface (9) for the protective switch (2) and with contact units (4), assigned to the connecting devices (8) of the protective switch (2), for contact components (3) of the switch and connecting elements (5), characterised in that the plug-in socket (1) can be assembled from two sub-components (6, 7) which fit together in form-locking fashion and each of which comprises a part of the bearing surface (9) and contact units (4).

2. A plug-in socket as claimed in Claim 2, characterised in that each sub-component (6, 7) of the plug-in socket (1) has a projection (10, 11) with a zone (12, 13) which overhangs in a tooth-like manner, and an adjacent recess (17, 19) which has a corresponding contour.

3. A plug-in socket as claimed in Claim 1, characterised in that the contact units (4) of each sub-component (6, 7) of the plug-in socket (1) are provided with bridge-like contact laminations (61) accommodated in a cage (41), and that the cages (41) which are accommodated in recesses of the sub-components (6, 7) are provided with openings for the engagement of plug-in contact components (3) on the sides of the switch and external connecting elements (5).

4. A plug-in socket as claimed in Claim 1, characterised in that for each current path each sub-component (6, 7) of the plug-in socket (1) has an opening extending in the longitudinal direction of the plug-in socket and a further opening which leads to the rear side of the plug-in socket (51, 52) for the passage of a connecting element (5; 43).

5. A plug-in socket as claimed in Claim 3, characterised in that each connecting element (5) has two contact surfaces (48, 50) which are arranged at right angles to one another and are intended to engage between the contact laminations (61), and that one flank (44) of the connecting element can be selectively inserted through the one opening (51) or the other opening (52).

6. A plug-in socket as claimed in Claim 1, characterised in that each sub-component (6, 7) comprises a pivotally-mounted insulating plate (77) which acts as cover for the openings (21) via which the plug-in contact components (3) of the protective switch (2) are engaged into the contact units (4), and that the insulating plate and the assigned end zone (cover 20) are provided with at least one opening (76, 80) through which a securing element can be pulled when it is in the raised state.

**Revendications**

1. Socle enfichable (1) pour disjoncteurs multipolaires de protection à basse tension (2) comportant un boîtier en matériau isolant et des dispositifs de raccordement (8) situés sur des extrémités opposées du boîtier en matériau isolant, le socle enfichable (1) possédant une surface d'appui (9) pour le disjoncteur de protection (2) et des unités de contact (4) associées aux dispositifs de raccordement (8) du disjoncteur de protection (2) et prévues pour des pièces de contact (3) situées du côté du disjoncteur et pour des organes de raccordement (5), caractérisé par le fait que le socle enfichable (1) est formé par la réunion de deux parties (6, 7) réalisées de manière à pouvoir être réunies selon une liaison par formes complémentaires et dont chacune contient une partie de la surface d'appui (9) et des unités de contact (4).

2. Socle enfichable suivant la revendication 2, caractérisé par le fait que chaque partie (6, 7) du socle enfichable (1) possède une partie saillante (10, 11) possédant une zone saillante en forme de dent (12, 13) et un évidement contigu (17, 19) possédant un contour correspondant.

3. Socle enfichable suivant la revendication 1, caractérisé par le fait que les unités de contact (4) de chaque partie (6, 7) du socle enfichable (1) possèdent des lamelles de contact (61) en forme d'étrier maintenues dans une cage (41) et que les cages (41), qui sont logées dans des évidements des parties (6, 7), possèdent des ouvertures pour l'engagement de pièces de contact enfichables (3), situées du côté disjoncteur, et des organes de raccordement (5).

4. Socle enfichable suivant la revendication 1, caractérisé par le fait que chaque partie (6, 7) du socle enfichable (1) possède pour chaque voie de courant une ouverture (51) débouchant dans la direction longitudinale du socle enfichable, et une ouverture (52) débouchant sur la face arrière du socle enfichable, pour le passage d'un organe de raccordement (5; 43).

5. Socle enfichable suivant la revendication 3, caractérisé par le fait que chaque organe de raccordement (5) possède deux surfaces de contact (48, 50) qui sont perpendiculaires l'une à l'autre et sont destinées à s'engager entre les lamelles de contact (61), et qu'une branche (44) de l'organe de raccordement peut être enfichée au choix dans l'une (51) ou l'autre (52) des ouvertures.

6. Socle enfichable suivant la revendication 1, caractérisé par le fait que chaque partie (6, 7) possède une plaque isolante (77) montée pivotante et servant de capot pour les ouvertures (21) prévues pour l'engagement des pièces de contact enfichables (3) du disjoncteur de protection (2) dans les unités de contact (4), et que la plaque isolante et la zone terminale associée (couvercle 20) possèdent au moins une ouverture (76, 80) permettant le tirage, à travers elles, d'un organe de sécurité dans la position relevée par pivotement.

FIG.1

FIG.2

FIG.3

FIG.4

FIG.5

FIG.6